# EUROPÄISCHE PATENTSCHRIFT

(11) **EP 0 515 886 B1**
(45) Veröffentlichungstag und Bekanntmachung des Hinweises auf die Patenterteilung: **28.06.1995**
(21) Anmeldenummer: 92107855.6
(22) Anmeldetag: 11.05.1992
(51) Int. Cl.: G01D 5/38, G01B 11/06, G01B 11/02

(54) **Positionsmesseinrichtung**
Position measuring device
Dispositif de mesure de position

(30) Priorität: 28.05.1991 DE 4117410; 13.09.1991 DE 4130435
(43) Veröffentlichungstag der Anmeldung: 02.12.1992
(73) Patentinhaber: Dr. Johannes Heidenhain GmbH, D-83292 Traunreut (DE)
(72) Erfinder: Spanner, Erwin, Dipl.-Ing., W-8220 Traunstein (DE)

(56) Entgegenhaltungen:
- WO-A-90/12280
- FR-A- 2 530 802

## Beschreibung

Die Erfindung betrifft eine Positionsmeßeinrichtung zur Messung der Relativlage zweier zueinander beweglicher Objekte.

Eine derartige Positionsmeßeinrichtung in Form einer Längenmeßeinrichtung zur Messung der Relativlage zweier Objekte ist aus der DE-A1 37 00 906 bekannt, bei der die translatorische Relativverschiebung zwischen einem Maßstabgitter und einem Abtastgitter senkrecht zur Normalenrichtung der beiden Gitter gemessen wird.

Eine weitere Positionsmeßeinrichtung zur Messung des Abstandes einer Meßfläche von einer Bezugsfläche in Normalenrichtung ist in der DE-C2 26 50 422 beschrieben, bei der ein kohärentes Lichtstrahlenbündel einer Laserlichtquelle unter einem vorgegebenen konstanten Winkel auf die Meßfläche gerichtet ist und die von der Meßfläche reflektierten Lichtstrahlen auf einen Detektor auftreffen, welcher den Reflexionswinkel zur Bestimmung dieses Abstandes auswertet. Vor dem Detektor ist als ortsveränderlicher Meßspalt eine auf einer rotierenden Scheibe befindliche evolventenförmige Schlitzblende angeordnet, die an einer stationären Spaltblende vorbeiläuft und mit welcher der je nach dem Abstand der Meßfläche unterschiedliche Reflexionswinkel der von der Meßfläche reflektierten Strahlen zur optischen Achse ermittelt wird. Diese Meßeinrichtung besitzt aber den Nachteil eines relativ aufwendigen Aufbaus.

In der FR-A 2 530 802 ist ein optischer Distanzmesser für zwei Flächen, mit zwei einen kleinen Winkel miteinander einschließenden Gittern offenbart.

Eine weitere Positionsmeßeinrichtung ist aus der US 4 656 347 bekannt. Diese zeigt ein Interferometer, bei dem als Referenzstrahl eine reflektierte erste Beugungsordnung eines Gitters mit zwei Meßstrahlen (transmittierte nullte und erste Beugungsordnung) interferieren. Dabei wird ein kurzperiodisches Signal durch ein langperiodisches Signal moduliert, das durch die reflektierte Abbildung des Gitters auf sich selbst zustande kommt.

Die DE 23 31 573 C3 beschreibt ein Verfahren zur opto-elektronischen digitalen Längenmessung, und zwar unter Ausnutzung von Moire'fransen-Konturlinien, die an einem Beugungsgitter erzeugt werden. Das Gitter dient dabei nicht der Abtastung eines Streifensystems, sondern zu dessen Erzeugung.

In der DE 37 30 091 A1 ist ein interferometrisches Distanzmeßgerät offenbart. Die Streifen des Interferometers zur Absolutmessung entstehen dabei durch Scherung von Lichtstrahlenbündeln. Dem Detektor ist dabei ein optisches Gitter vorgeschaltet, dessen Gitterkonstante in etwa dem Abstand der Interferenzstreifen entspricht.

Der Erfindung liegt die Aufgabe zugrunde, eine Positionsmeßeinrichtung der genannten Gattung anzugeben, die einfach und raumsparend im Aufbau ist sowie eine hochgenaue Messung der Relativlage von Objekten in wenigstens einer Meßrichtung erlaubt.

Diese Aufgabe wird erfindungsgemäß durch die Merkmale des Anspruches 1 gelöst.

Die mit der Erfindung erzielten Vorteile bestehen insbesondere darin, daß durch den einfachen und raumsparenden Aufbau eine besonders preisgünstige Positionsmeßeinrichtung mit hoher Einsatzflexibilität an Maschinen geschaffen wird, die eine hohe Meßgenauigkeit in wenigstens einer Meßrichtung erlaubt. Insbesondere bei senkrechtem Einfall des Lichtstrahlenbündels auf die Meßfläche sind auch große Abstandsänderungen der Meßfläche möglich.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1: eine erste Positionsmeßeinrichtung in einer schematischen Seitenansicht;
- Figur 2: eine erste Variante der ersten Positionsmeßeinrichtung;
- Figur 3: eine zweite Variante der ersten Positionsmeßeinrichtung;
- Figur 4: eine zweite Positionsmeßeinrichtung in einer schematischen Seitenansicht und
- Figur 5: eine Variante der zweiten Positionsmeßeinrichtung.

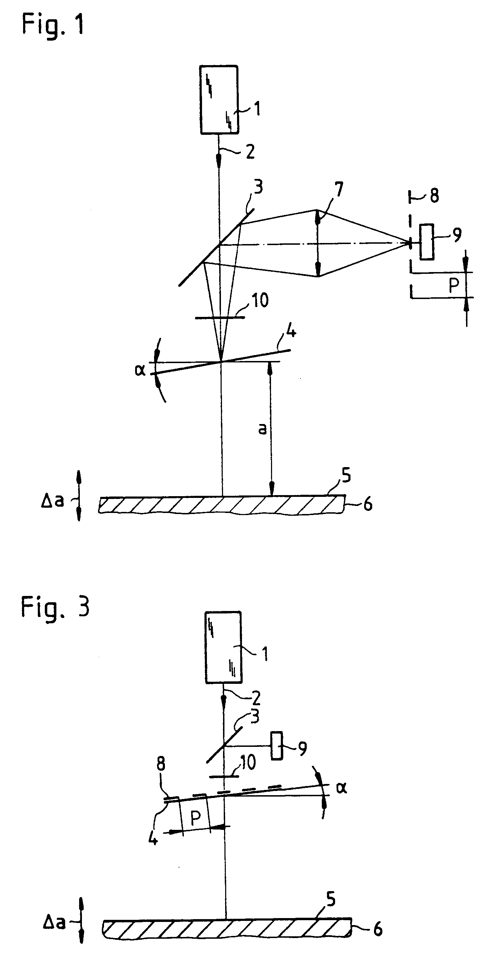

In Figur 1 ist eine erste Positionsmeßeinrichtung in einer schematischen Seitenansicht gezeigt. Ein von einer Laserlichtquelle 1 ausgehendes kohärentes Lichtstrahlenbündel 2 durchsetzt geradlinig eine schräg angeordnete Teilerplatte 3 sowie eine erste Fläche 4 in Form einer ebenen Bezugsfläche eines nicht dargestellten ersten Objekts und trifft senkrecht auf eine zweite Fläche 5 in Form einer ebenen Meßfläche eines zweiten Objekts 6 auf. Die Bezugsfläche 4 ist gegen die Meßfläche 5 um einen Winkel α geneigt und weist von der Meßfläche 5 den Abstand a in der Mittellinie des Lichtstrahlenbündels 2 auf.

Das von der Meßfläche 5 senkrecht reflektierte Lichtstrahlenbündel 2 fällt in sich selbst wieder auf die Bezugsfläche 4 und erzeugt dort wegen der Neigung der Bezugsfläche 4 um den Winkel α gegenüber der Meßfläche 5 sogenannte Fizeau-Streifen (Interferenzen gleicher Dicke) mit einer Streifenperiode w=λ/2α (λ = Wellenlänge des Lichtstrahlenbündels 2). Diese Fizeau-Streifen werden nach einer Umlenkung durch die Teilerplatte 3 mittels einer Abbildungsoptik 7 auf eine Gitterteilung 8 mit einer Teilungsperiode P abgebildet.

Bei einer Abstandsänderung Δa=λ/2 des Abstandes a zwischen der Bezugsfläche 4 und der Meßfläche 5 durch eine Relativbewegung des zweiten Objekts 6 gegenüber dem ersten Objekt in Normalenrichtung dieser Meßfläche 5 verschieben sich die Fizeau-Streifen um eine Streifenperiode w. Die bei der Verschiebung der Fizeau-Streifen gegenüber der Gitterteilung 8 als Abtastteilung entstehende Intensitätsmodulation wird von einer Detektoreinrichtung 9 zur Erzeugung von Abtastsignalen zur Gewinnung von Meßwerten für die Abstandsänderung Δa detektiert. Die Signalperiode der Abtastsignale ist daher immer λ/2 und somit unabhängig von der Teilungsperiode P der Gitterteilung 8, welche bevorzugt gleich der Streifenperiode w der Fizeau-Streifen ist.

Zur Gewinnung von phasenverschobenen Abtastsignalen kann auch die Gitterteilung 8 als Abtastteilung entsprechend versetzte Teilungsfelder aufweisen.

Die Meßfläche 5 kann als Spiegel oder als Reflexionsgitter ausgebildet sein; bei einem Reflexionsgitter wird nur das Beugungsstrahlenbündel nullter Ordnung verwendet. Bei nichtsenkrechtem Einfall des Lichtstrahlenbündels 2 auf die Meßfläche 5 in Form eines Reflexionsgitters können auch Beugungsstrahlenbündel höherer Ordnung herangezogen werden.

Durch eine optimale Abstimmung der Reflektivität der Bezugsfläche 4 auf diejenige der Meßfläche 5 kann ein Kontrast der Fizeau-Streifen von theoretisch 100% erreicht werden (z. B. bei einer Reflektivität der Meßfläche 5 von 0,85 ergibt sich eine Reflektivität der Bezugsfläche 4 von 0,35).

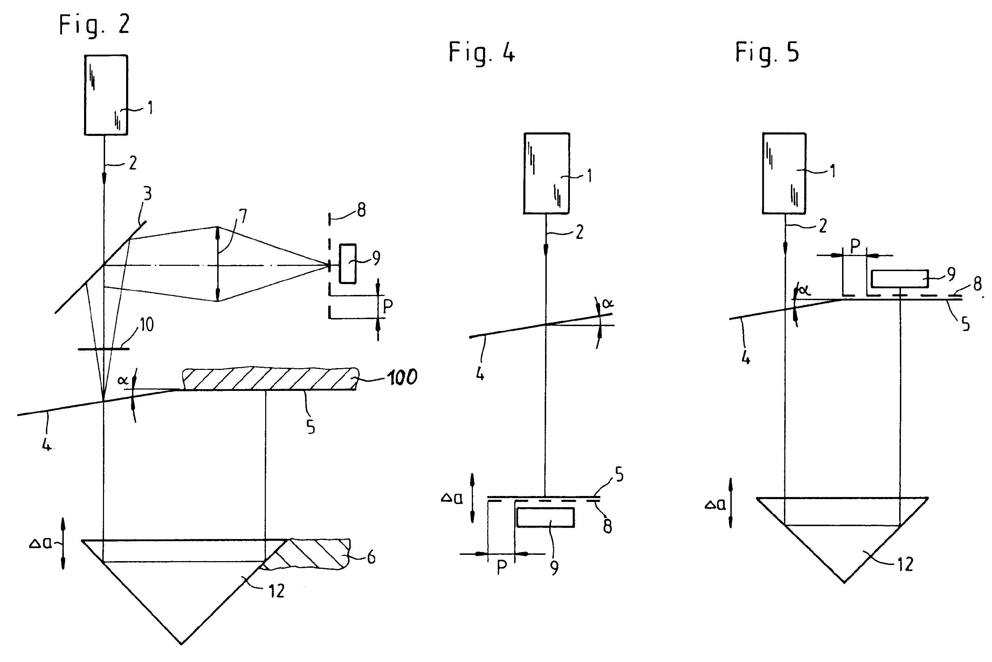

In Figur 2 ist eine erste Variante der ersten Positionsmeßeinrichtung nach Figur 1 mit den gleichen Bezugszeichen gezeigt, bei der das von der Laserlichtquelle 1 ausgehende kohärente Lichtstrahlenbündel 2 geradlinig die schräg angeordnete Teilerplatte 3 sowie die Bezugsfläche 4 des ersten Objekts 100 durchsetzt und nach Reflexion mittels eines mit dem zweiten Objekt 6 verbundenen Retroreflektors 12 parallel zu sich selbst auf die Fläche 5 trifft. Nach erneuter Reflexion von der Fläche 5 fällt das kohärente Lichtstrahlenbündel 2 in sich selbst nach erneuter Durchsetzung des Retroreflektors 12 wieder auf die Bezugsfläche 4 zur Erzeugung der Fizeau-Streifen. Bevorzugt sind die Bezugsfläche 4 und die Fläche 5 starr miteinander verbunden, so daß der gegenseitige Winkel α stets konstant bleibt; die Bezugsfläche 4 und die Fläche 5 sind gemeinsam mit dem ersten Objekt 100 verbunden. Damit wird unabhängig von Toleranzbewegungen der Abtasteinrichtung, die die Laserlichtquelle 1, die Teilerplatte 3, die Bezugsfläche 4, die Fläche 5, die Abbildungsoptik 7, die Gitterteilung 8 und die Detektoreinrichtung 9 aufweist, eine konstante Streifenperiode w der Fizeau-Streifen ermöglicht. Diese Verwendung eines Retroreflektors 12 (z. B. Tripelprisma) ermöglicht sehr große Anbautoleranzen an das zugehörige Objekt 6.

In Figur 3 ist eine zweite Variante der ersten Positionsmeßeinrichtung nach Figur 1 mit den gleichen Bezugszeichen gezeigt, bei der die Gitterteilung 8 direkt auf der Bezugsfläche 4 integriert angeordnet ist, so daß sich eine raumsparende Anordnung ohne Abbildungsoptik ergibt.

In Figur 3 können auch die Bezugsfläche 4 mit der Gitterteilung 8 senkrecht zum einfallenden Lichtstrahlenbündel 2 angeordnet und die Meßfläche 5 gegenüber der Bezugsfläche 4 um den Winkel α geneigt sein. Bei dieser Ausführungsform kann sodann die Gitterteilung 8 als Meßteilung in einer zweiten Meßrichtung senkrecht zur Normalenrichtung (die selbst die erste Meßrichtung bildet) der Bezugsfläche 4 verschoben werden. Diese beiden Verschiebungen in den beiden Meßrichtungen können nur zeitlich nacheinander durchgeführt werden, und zwar in der ersten Meßrichtung in Normalenrichtung mit der Signalperiode λ/2 und in der zweiten Meßrichtung senkrecht zur Normalenrichtung und senkrecht zu den Teilungsstrichen der Gitterteilung 8 mit der Teilungsperiode P der Gitterteilung 8.

Zur Gewinnung von phasenverschobenen Abtastsignalen kann nun die Gitterteilung 8 als Meßteilung entsprechend versetzte Teilungsspuren aufweisen.

In Figur 4 ist eine zweite Positionsmeßeinrichtung in einer schematischen Seitenansicht mit den gleichen Bezugszeichen nach Figur 1 gezeigt. Ein von einer Laserlichtquelle 1 ausgehendes kohärentes Lichtstrahlenbündel 2 durchsetzt eine erste Fläche 4 in Form einer Bezugsfläche eines nicht dargestellten ersten Objekts und trifft sodann auf eine zweite Fläche 5 in Form einer Meßfläche eines ebenfalls nicht dargestellten zweiten Objekts und erzeugt dort wegen der gegenseitigen Neigung der beiden Flächen 4 und 5 Fizeau-Streifen, die durch eine parallel zur Meßfläche 5 angeordnete Gitterteilung 8 als Abtastteilung auf eine Detektoreinrichtung 9 fallen, die Abtastsignale zur Gewinnung von Meßwerten für die Abstandsänderung Δa des Abstandes der Meßfläche 5 von der Bezugsfläche 4 in einer ersten Meßrichtung in Normalenrichtung der Meßfläche 5 erzeugt. Bevorzugt kann die Gitterteilung 8 auch direkt auf der Bezugsfläche 5 integriert angeordnet werden.

In Figur 5 ist eine Variante der zweiten Positionsmeßeinrichtung mit den gleichen Bezugszeichen nach Figur 4 gezeigt. Das von der Laserlichtquelle 1 ausgehende kohärente Lichtstrahlenbündel 2 durchsetzt die Bezugsfläche 4 des ersten Objekts und trifft nach Reflexion mittels eines mit dem zweiten Objekt verbundenen Retroreflektors 12 parallel zu sich selbst auf die Fläche 5. Bevorzugt sind die Bezugsfläche 4 und die Fläche 5 starr miteinander verbunden, so daß der gegenseitige Winkel α stets konstant bleibt; damit wird unabhängig von Toleranzbewegungen der Abtasteinrichtung, die die Laserlichtquelle 1, die Bezugsfläche 4, die Fläche 5, die Gitterteilung 8 und die Detektoreinrichtung 9 aufweist, eine konstante Streifenperiode w der Fizeau-Streifen ermöglicht. Diese Verwendung eines Retroreflektors 12 (z. B. Tripelprisma) ermöglicht sehr große Anbautoleranzen an das zugehörige Objekt.

Mit der Ausführungsform der Figur 4 können gleichfalls Messungen in den beiden Meßrichtungen gemäß dem Ausführungsbeispiel nach Figur 3 durchgeführt werden.

Bevorzugt kann die Laserlichtquelle 1 auch einen Kollimator aufweisen und die Bezugsfläche 4 von einer dielektrischen oder metallischen Schicht gebildet werden.

Statt gerader Fizeau-Streifen ist durch die Verwendung einer konvexen Bezugsfläche 4 auch die Bildung von Newton-Ringen möglich, die durch ein Abtastgitter in Form einer ringförmigen Zonenplatte abgetastet werden; gleichfalls ist auch die Erzeugung anderer Fizeau-Streifenmuster denkbar.

Die Gitterteilung 8 als Abtastteilung kann auch vier gegeneinander versetzte Teilungsfelder aufweisen, mittels derer durch vier zugeordnete Detektoren in bekannter Weise um 90° gegeneinander phasenverschobene, nullsymmetrische Abtastsignale zur Bildung von Meßwerten mit zusätzlicher Erkennung der Meßrichtung gewonnen werden können.

Zur optimalen Intensitätsausnutzung ist die Teilerplatte 3 als Polarisationsteilerplatte ausgebildet und zwischen der Bezugsfläche 4 und der Teilerplatte 3 befindet sich eine λ/4-Platte 10.

Nach Figur 1 kann auch eine Bildverarbeitung erfolgen, wenn anstatt auf die Gitterteilung 8 als Abtastteilung auf eine CCD-Kamera abgebildet wird. Aus einer Änderung von Streifenneigung, Streifenabstand und Streifenphase ist eine Änderung von Drehung, Kippung und Abstand bestimmbar.

Nach den Figuren 3 und 4 kann in kinematischer Umkehr anstelle der Fläche 5 auch die Bezugsfläche 4 eine Verschiebung relativ zur Meßfläche 5 erfahren.

## Patentansprüche

1. Positionsmeßeinrichtung zur Messung der Relativlage zweier zueinander beweglicher Objekte (6, 100), bei der
- ein von einer Lichtquelle (1) ausgehendes Lichtstrahlenbündel (2) durch eine optisch wirksame Bezugsfläche (4) des einen Objektes (100) auf eine weitere optisch wirksame Meßfläche (5) gelangt,
- die Bezugsfläche (4) und die Meßfläche (5) einen von Null verschiedenen Winkel α einschließen, so daß Licht von der Bezugs- und Meßfläche (4, 5) zur Interferenz gelangt und ein Streifenmuster bildet, dessen Streifenlage von der Länge des Weges, den das Licht zwischen der Bezugsfläche (4) und der Meßfläche (5) zurücklegt abhängt, wobei
- die Länge des Weges von der Lage des weiteren Objektes (6) bestimmt ist und
- das Streifenmuster auf eine Detektoreinrichtung (9) fällt, wobei
- zwischen der Bezugs- oder Meßfläche (4, 5) und der Detektoreinrichtung (9) eine Gitterteilung (8) zur Abtastung des Streifenmusters vorgesehen ist.

2. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig eine schräg angeordnete Teilerplatte (3) sowie die Bezugsfläche (4) des einen Objekts unter dem Winkel α zu ihrer Normalen durchsetzt und nach der senkrechten Reflexion von der Meßfläche (5) des weiteren Objekts (6) wieder auf die Bezugsfläche (4) fällt und dort Fizeau-Streifen erzeugt, die nach einer Umlenkung durch die Teilerplatte (3) mittels einer Abbildungsoptik (7) auf die Gitterteilung (8) als Abtastteilung abgebildet und von der Detektoreinrichtung (9) zur Erzeugung von Abtastsignalen zur Gewinnung von Meßwerten für die Abstandsänderung Δa des Abstandes a der Meßfläche (5) von der Bezugsfläche (4) in einer ersten Meßrichtung detektiert werden.

3. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig eine schräg angeordnete Teilerplatte (3) sowie die Bezugsfläche (4) des einen Objekts (100) unter dem Winkel α zu ihrer Normalen durchsetzt, über einen Retroreflektor (12) am weiteren Objekt (6) umgelenkt und parallel zu sich selbst senkrecht auf die Meßfläche (5), die mit der Bezugsfläche (4) unter dem Winkel α verbunden ist, gelangt, von dieser in sich selbst reflektiert nach erneuter Durchsetzung des Retroreflektors (12) wieder auf die Bezugsfläche (4) fällt und dort ein Fizeau-Streifenmuster bildet, das nach einer Umlenkung durch die Teilerplatte (3) mittels einer Abbildungsoptik (7) auf die Gitterteilung (8) als Abtastteilung abgebildet und von der Detektoreinrichtung (9) zur Erzeugung von Abtastsignalen zur Gewinnung von Meßwerten für die Abstandsänderung Δa des Abstands des Retroreflektors (12) von der Bezugsfläche (4) in einer ersten Meßrichtung detektiert wird.

4. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig eine schräg angeordnete Teilerplatte (3) sowie die Bezugsfläche (4) des einen Objekts unter dem Winkel α zu ihrer Normalen durchsetzt und nach der Reflexion von der Meßfläche (5) des weiteren Objekts (6) unter dem Winkel α zu ihrer Normalen wieder auf die Bezugsfläche (4) fällt und dort Fizeau-Streifen erzeugt, die auf die parallel zur Bezugsfläche (4) angeordnete Gitterteilung (8) als Abtastteilung abgebildet und nach einer Umlenkung durch die Teilerplatte (3) von der Detektoreinrichtung (9) zur Erzeugung von Abtastsignalen zur Gewinnung von Meßwerten für die Abstandsänderung Δa des Abstandes a der Meßfläche (5) von der Bezugsfläche (4) in einer ersten Meßrichtung detektiert wird.

5. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig eine schräg angeordnete Teilerplatte (3) sowie die Bezugsfläche (4) des einen Objekts in ihrer Normalenrichtung durchsetzt, nach der Reflexion von der Meßfläche (5) des weiteren Objekts (6) unter dem Winkel α zu ihrer Normalen wieder auf die Bezugsfläche (4) fällt und dort ein Fizeau-Streifenmuster bildet, das auf die parallel zur Bezugsfläche (4) angeordnete Gitterteilung (8) als Abtastteilung oder als Meßteilung abgebildet und nach einer Umlenkung durch die Teilerplatte (3) von der Detektoreinrichtung (9) zur Erzeugung von Abtastsignalen zur Gewinnung von Meßwerten für die Verschiebung der Gitterteilung (8) zusätzlich zu der ersten Meßrichtung in einer zweiten Meßrichtung senkrecht zur Normalenrichtung der Bezugsfläche (4) und senkrecht zu den Teilungsstrichen der Gitterteilung (8) detektiert wird.

6. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig die Bezugsfläche (4) des einen Objekts unter dem Winkel α zu ihrer Normalen durchsetzt, senkrecht auf die Meßfläche (5) des zweiten Objekts fällt und dort das Fizeau-Streifenmuster bildet, das auf die parallel zur Meßfläche (5) angeordnete Gitterteilung (8) als Abtastteilung abgebildet und von der Detektoreinrichtung (9) zur Erzeugung von Abtastsignalen zur Gewinnung von Meßwerten für die Abstandsänderung Δa des Abstandes der Meßfläche (5) von der Bezugsfläche (4) in einer ersten Meßrichtung detektiert wird.

7. Positionsmeßeinrichtung nach Anspruch 1, dadurch gekennzeichnet, daß die Lichtquelle eine Laserlichtquelle (1) ist und das von ihr ausgehende kohärente Lichtstrahlenbündel (2) geradlinig die Bezugsfläche (4) des einen Objekts unter dem Winkel α zu ihrer Normalen durchsetzt, über einen Retroreflektor (12) am weiteren Objekt umgelenkt und parallel zu sich selbst senkrecht auf die Meßfläche (5), die mit der Bezugsfläche (4) unter dem Winkel α verbunden ist, fällt und dort das Fizeau-Streifenmuster bildet, das auf die parallel zur Meßfläche (5) angeordnete Gitterteilung (8) als Abtastteilung abgebildet und von der Detektoreinrichtung (9) zur Erzeugung von Abtastsignalen zur Gewinnung von Meßwerten für die Abstandsänderung Δa des Abstands des Retroreflektors (12) von der Bezugsebene (4) in einer ersten Meßrichtung detektiert wird.

8. Positionsmeßeinrichtung nach Anspruch 4 oder 5, dadurch gekennzeichnet, daß die Gitterteilung (8) direkt auf der Bezugsfläche (4) integriert angeordnet ist.

9. Positionsmeßeinrichtung nach einem der Ansprüche 1 bis 5, dadurch gekennzeichnet, daß die Meßfläche (5) als Spiegel oder als Reflexionsgitter ausgebildet ist.

10. Positionsmeßeinrichtung nach einem der Ansprüche 1 bis 7, dadurch gekennzeichnet, daß die Bezugsfläche (4) von einer dielektrischen oder metallischen Schicht gebildet wird.

11. Positionsmeßeinrichtung nach einem der Ansprüche 1 bis 5, dadurch gekennzeichnet, daß die Teilerplatte (3) Polarisationseigenschaften aufweist.

12. Positionsmeßeinrichtung nach einem der Ansprüche 1 bis 5, dadurch gekennzeichnet, daß zwischen der Bezugsfläche (4) und der Teilerplatte (3) eine λ/4 Platte (10) angeordnet ist.

13. Positionsmeßeinrichtung nach einem der Ansprüche 1 bis 7, dadurch gekennzeichnet, daß die Teilungsperiode der Gitterteilung (8) gleich der Streifenperiode w des Streifenmusters ist.

## Claims

1. Position-measuring device for measuring the relative position of two objects (6, 100) movable with respect to one another, in which
- a beam of light rays (2) emerging from a light-source (1) passes through an optically effective reference surface (4) of one of the objects (100) on to another optically effective measuring surface (5);
- the reference surface (4) and the measuring surface (5) enclose an angle α which is different from zero, so that light from the reference and measurement surface (4, 5) reaches interference and forms a strip pattern, the position of the strips in said pattern depending on the length of the path covered by the light between the reference surface (4) and the measuring surface (5),
- the length of the path being determined by the position of the further object (6), and
- the strip pattern impinging on a detector device (9),
- a grid subdivision (8) for scanning the strip pattern being provided between the reference- or measuring surface (4, 5) and the detector device.

2. Position-measuring device according to claim 1, characterised in that the light-source is a laser light-source (1) and that the coherent beam of light rays (2) emerging therefrom passes in a straight line through an obliquely-disposed divider plate (3) and the reference surface (4) of one object at an angle α to its normal and, after vertical reflection from the measuring surface (5) of the further object (6), again falls on the reference surface (4) and there generates Fizeau strips which, after deflection through the divider plate (3) are imaged by means of an optical imaging device (7) on the grid subdivision (8) as a scanning division, and are detected in a first measuring direction by the detector device (9) in order to generate scanning signals to obtain measurement values for the alteration in distance Δa of the measuring surface (5) from the reference surface (4).

3. Position-measuring device according to claim 1, characterised in that the light-source is a laser light-source (1), and that the coherent beam of light rays (2) emerging therefrom passes in a straight line through an obliquely-disposed divider plate (3) and the reference surface (4) of one object (100) at an angle α to its normal, is deflected through a retroreflector (12) on the further object (6) and passes, parallel to itself, vertically on to the measuring surface (5) which is connected to the reference surface (4) at the angle α, and, reflected into itself by said reference surface (4), and after passing once again through the retroreflector (12), again falls on to the reference surface (4), there forming a Fizeau strip pattern which, after deflection through the divider plate (3), is imaged by an optical imaging device (7) on the grid subdivision (8) as a scanning division, and is detected in a first measuring direction by the detector device (9) in order to generate scanning signals to obtain measurement values for the alteration in distance Δa of the retroreflector (12) from the reference surface (4).

4. Position-measuring device according to claim 1, characterised in that the light-source is a laser light-source (1), and that the coherent beam of light rays (2) emerging therefrom passes in a straight line through an obliquely-disposed divider plate (3) and the reference surface (4) of one object at an angle α to its normal and, after reflection from the measuring surface (5) of the further object (6), again falls at the angle α to its normal on to the reference surface (4) and there forms Fizeau strips, which are imaged as a scanning division on the grid subdivision (8) disposed parallel to the reference surface (4) and, after deflection through the divider plate (3), is detected in a first measuring direction by the detector device (9) in order to generate scanning signals to obtain measurement values for the alteration in distance Δa of the distance a of the measuring surface (5) from the reference surface (4).

5. Position-measuring device according to claim 1, characterised in that the light-source is a laser light-source (1), and that the coherent beam of light rays (2) emerging therefrom passes in a straight line through an obliquely-disposed divider plate (3) and the reference surface (4) of one object in its normal direction, after reflection from the measuring surface (5) of the further object (6), again falls at the angle α to its normal on to the reference surface (4) and there forms a Fizeau strip pattern, which is imaged on the grid subdivision (8) disposed parallel to the reference surface (4) as a scanning division, or as a measurement subdivision and, after deflection through the divider plate (3), is detected by the detector device (9) in order to generate scanning signals to obtain measurement values for the displacement of the grid subdivision (8) in addition to the first measuring direction, in a second measuring direction vertical to the normal direction of the reference surface (4), and vertically to the division marks of the grid subdivision (8).

6. Position-measuring device according to claim 1, characterised in that the light-source is a laser light-source (1), and that the coherent beam of light rays (2) emerging therefrom passes in a straight line through the reference surface (4) of one object at the angle α to its normal, falls vertically on to the measuring surface (5) of the second object and there forms the Fizeau strip pattern, which is imaged on the grid subdivision (8) disposed parallel to the measuring surface (5), and is detected in a first measuring direction by the detector device (9) in order to generate scanning signals to obtain measurement values for the alteration in distance Δa of the distance of the measuring surface (5) from the reference surface (4).

7. Position-measuring device according to claim 1, characterised in that the light-source is a laser light-source (1), and that the coherent beam of light rays (2) emerging therefrom passes in a straight line through the reference surface (4) of one object at the angle α to its normal, is deflected via a retroreflector (12) on the further object, and falls, parallel to itself, vertically on to the measuring surface (5), which is connected to the reference surface (4) at the angle α, and there forms the Fizeau strip pattern, which is imaged as a scanning division on the grid subdivision (8) disposed parallel to the measuring surface (5), and is detected in a first measuring direction by the detector device (9) in order to generate scanning signals to obtain measurement values for the alteration in distance Δa of the distance of the retroreflector (12) from the reference plane (4).

8. Position-measuring device according to claim 4 or 5, characterised in that the grid subdivision (8) is directly integrated on the reference surface (4).

9. Position-measuring device according to one of claims 1 to 5, characterised in that the measuring surface (5) is in the form of a mirror or of a reflective grid.

10. Position-measuring device according to one of claims 1 to 7, characterised in that the reference surface (40 is in the form of a dielectric or metallic layer.

11. Position-measuring device according to one of claims 1 to 5, characterised in that the divider plate (3) has polarising properties.

12. Position-measuring device according to one of claims 1 to 5, characterised in that a λ/4 plate (10) is disposed between the reference surface (4) and the divider plate (3).

13. Position-measuring device according to one of claims 1 to 7, characterised in that division interval of the grid subdivision (8) is equal to the strip interval w of the strip pattern.

## Revendications

1. Dispositif de mesure de position pour la mesure de la position relative de deux objets (6, 100) mobiles l'un par rapport à l'autre, dans lequel
- un faisceau (2) de rayons lumineux provenant d'une source (1) de lumière traverse une surface de référence (4) active optiquement de l'un (100) des objets et arrive sur une autre surface de mesure (5) active optiquement,
- la surface de référence (4) et la surface de mesure (5) forment un angle α non nul tel que la lumière provenant des surfaces de référence et de mesure (4, 5) soit amenée en interférence et forme un motif de franges dans lequel la position des franges dépend de la longueur du chemin parcouru par la lumière entre la surface de référence (4) et la surface de mesure (5),
- la longueur du chemin étant déterminée par la position de l'autre objet (6) et
- le motif de franges parvenant à un dispositif de détection (9),
- une graduation en réseau (8) étant prévue entre la surface de référence ou la surface de mesure (4, 5) et le dispositif de détection (9) aux fins de lire le motif de franges.

2. Dispositif de mesure selon la revendication 1, caractérisé par le fait que la source de lumière est une source (1) de lumière laser et que le faisceau (2) cohèrent de rayons lumineux émis par celle-ci traverse sans déviation une lame séparatrice (3) inclinée ainsi que la surface de référence (4) de l'un des objets en formant un angle α avec la normale à celle-ci et, après réflexion par la surface de mesure (5) de l'autre objet (6), revient sur la surface de référence (4) et produit sur celle-ci des raies de Fizeau qui, après avoir subi une déviation sur la lame séparatrice (3), sont reproduites à l'aide d'une optique de reproduction (7) sur la graduation en réseau (8) formant graduation de lecture et sont détectées par un dispositif de détection (9) pour produire des signaux de lecture aux fins de former des valeurs de mesure pour la variation Δa de la distance a séparant la surface de mesure (5) de la surface de référence (4) dans une première direction de mesure.

3. Dispositif de mesure selon la revendication 1, caractérisé par le fait que la source de lumière est une source (1) de lumière laser et que le faisceau (2) cohérent de rayons lumineux émis par celle-ci traverse sans déviation une lame séparatrice (3) inclinée ainsi que la surface de référence (4) de l'un (100) des objets en formant un angle α avec la normale à celle-ci, est dévié par un rétro-réflecteur (12) sur l'autre objet (6), est amené parallèlement à lui-même sur la surface de mesure (5) qui est liée à la surface de référence en formant avec elle un angle α, est réfléchi sur lui-même par ladite surface de mesure, après avoir de nouveau traversé le rétro-réflecteur (12) frappe de nouveau la surface de référence (4) et forme sur celle-ci un modèle de franges de Fizeau qui, après une déviation par la lame séparatrice (3) est reproduit à l'aide d'une optique de reproduction (7) sur la graduation en réseau (8) formant graduation de lecture et est détecté par le dispositif de détection (9) pour former des signaux de lecture aux fins d'obtenir des valeurs de mesure pour la variation de la distance Δa entre le rétro-réflecteur (12) et la surface de référence (4) dans une première direction de mesure.

4. Dispositif de mesure selon la revendication 1, caractérisé par le fait que la source de lumière est une source (1) de lumière laser et que le faisceau (2) cohérent de rayons lumineux émis par celle-ci traverse sans déviation une lame séparatrice (3) inclinée ainsi que la surface de référence (4) de l'un des objets en formant un angle α avec la normale à celle-ci et après réflexion sur la surface de mesure (5) de l'autre objet (8) sous un angle α par rapport à la normale à celle-ci, frappe de nouveau la surface de référence (4) et forme sur celle-ci un modèle de franges de Fizeau qui est reproduit sur la graduation en réseau (8) formant graduation de lecture, diposée parallèlement à la surface de référence (4), et après une déviation par la lame séparatrice (3) est détecté par le dispositif de détection (9) pour former des signaux de lecture aux fins d'obtenir des valeurs de mesure pour la variation de la distance Δa entre la surface de mesure (5) et la surface de référence (4) dans une première direction de mesure.

5. Dispositif de mesure selon la revendication 1, caractérisé par le fait que la source de lumière est une source (1) de lumière laser et que le faisceau (2) cohérent de rayons lumineux émis par celle-ci traverse sans déviation une lame séparatrice (3) inclinée ainsi que la surface de référence (4) de l'un des objets dans la direction de la normale à celle-ci, après réflexion par la surface de mesure (5) de l'autre objet (6) sous un angle α par rapport à la normale à ladite surface, frappe de nouveau la surface de référence (4) et forme sur celle-ci un modèle de franges de Fizeau qui est reproduit sur la graduation en réseau (8) formant graduation de lecture ou graduation de mesure disposée parallèlement à la surface de référence (4) et après une déviation par la lame séparatrice (3) est détecté par le dispositif de détection (9) pour former des signaux de lecture aux fins de déterminer des valeurs de mesure pour le décalage de la graduation en réseau (8), outre dans la première direction de mesure, dans une deuxième direction de mesure perpendiculaire à la normale à la surface de référence (4) et perpendiculaire aux repères de graduation de la graduation en réseau (8).

6. Dispositif de mesure selon la revendication 1, caractérisé par le fait que la source de lumière est une source (1) de lumière laser et que le faisceau (2) cohérent de rayons lumineux émis par celle-ci traverse sans déviation la surface de référence (4) de l'un des objets en formant un angle α avec la normale à celle-ci arrive perpendiculairement sur la surface de mesure (5) du deuxième objet et forme sur celle-ci un modèle de franges de Fizeau qui est reproduit sur la graduation en réseau (8) formant graduation de lecture disposée parallèlement à la surface de mesure (5) et est détecté par le dispositif de détection (9) pour former des signaux de lecture aux fins d'obtenir des valeurs de mesure pour la variation de la distance Δa entre la surface de mesure (5) et la surface de référence (4) dans une première direction de mesure.

7. Dispositif de mesure selon la revendication 1, caractérisé par le fait que la source de lumière est une source (1) de lumière laser et que le faisceau (2) cohérent de rayons lumineux émis par celle-ci traverse sans déviation la surface de référence (4) de l'un des objets en formant un angle α avec la normale à celle-ci est dévié par un rétro-réflecteur (12) placé sur l'autre objet et arrive parallèlement à lui-même sur la surface de mesure (5) qui est liée à la surface de référence (4) en formant avec elle un angle α et forme sur ladite surface de mesure un modèle de franges de Fizeau qui est reproduit sur la graduation en réseau (8) formant graduation de lecture disposée parallèlement à la surface de mesure (4) et est détecté par le dispositif de détection (9) pour former des signaux de lecture aux fins d'obtenir des valeurs de mesure pour la variation de la distance Δa entre rétro-réflecteur (12) et la surface de référence (4) dans une première direction de mesure.

8. Dispositif de mesure selon la revendication 4 ou la revendication 5, caractérisé par la graduation en réseau (8) est directement intégrée dans la surface de référence (4).

9. Dispositif de mesure selon l'une des revendications 1 à 5, caractérisé par le fait que la surface de mesure (5) est agencée sous forme de miroir ou de réseau de réflexion.

10. Dispositif de mesure selon l'une des revendications 1 à 5, caractérisé par le fait que la surface de référence (4) est constituée par une couche diélectrique ou une couche métallique.

11. Dispositif de mesure selon l'une des revendications 1 à 5, caractérisé par le fait que la lame séparatrice (3) présente des caractéristiques polarisantes.

12. Dispositif de mesure selon l'une des revendications 1 à 5, caractérisé par le fait qu'une lame λ/4 (10) est disposée entre la surface de référence (4) et la lame séparatrice (3).

13. Dispositif de mesure selon l'une des revendications 1 à 7, caractérisé par le fait que la période de division de la graduation en réseau (8) est égale à la période w des franges du motif de franges.
